# EUROPÄISCHE PATENTSCHRIFT

(11) **EP 0 345 551 B1**
(45) Veröffentlichungstag und Bekanntmachung des Hinweises auf die Patenterteilung: **08.09.1993**
(21) Anmeldenummer: 89109457.5
(22) Anmeldetag: 25.05.1989
(51) Int. Cl.: C08K 5/32, C08L 81/02

(54) **Leichtfliessende, verzögert kristallisierende Polyarylensulfide-Mischungen**
Easily flowable delayed crystallising polyarylene sulfide-mixtures
Mélanges de sulfures de polyarylène avec une cristallisation rétardée s'écoulant facilement

(30) Priorität: 08.06.1988 DE 3819479
(43) Veröffentlichungstag der Anmeldung: 13.12.1989
(73) Patentinhaber: BAYER AG, 51368 Leverkusen (DE)
(72) Erfinder: Heinz, Hans-Detlef, Dr., D-4150 Krefeld 11 (DE); Köhler, Burkhard, Dr., D-4150 Krefeld 11 (DE); Meyer, Rolf-Volker, Dr., D-4150 Krefeld (DE); Reinking, Klaus, Dr., D-5632 Wermelskirchen (DE); Sommer, Alexa, Dr., D-5000 Köln 80 (DE)

(56) Entgegenhaltungen:
- DE-A- 2 903 100

## Beschreibung

Die Erfindung betrifft neue, leichtfließende,verzögert kristallisierende Arylensulfidpolymer-Mischungen, vorzugsweise Phenylensulfidpolymer-Mischungen mit gegebenenfalls zusätzlich verbesserter Beständigkeit gegen UV-Strahlung, hergestellt durch Schmelzvermischung von PAS mit aromatischen Mononitroverbindungen, bevorzugt unter Anwendung von Scherkräften.

Arylensulfidpolymere sind bekannt, z.B. US-A- 3 354 129, EP-A- 171 021. Sie werden als inerte, hochtemperaturbeständige Thermoplaste, die zudem einen hohen Füllgrad mit Glasfasern und/oder anderen Materialien erlauben, zunehmend für die Elektroindustrie und andere Industriebreiche interessant.

Der Einsatz dieser Polymeren, insbesondere des Polyparaphenylensulfids (PPS), nimmt vor allem in Bereichen, die bislang Duroplasten vorbehalten waren, wegen der einfacheren Verarbeitbarkeit zu.

Spritzgußfähige PPS-Formmassen, die für gewöhnlich Glasfasern und/oder mineralische Füllstoffe in hohen Konzentrationen enthalten, zeichnen sich allgemein durch niedrige Viskositäten der Schmelzen aus. Infolgedessen macht ihre Verarbeitung durch Spritzgießen normalerweise keine Schwierigkeiten.

Bei der Herstellung dünnwandiger Formteile können jedoch in speziellen Fällen aufgrund der großen Kristallisationsneigung von Arylensulfidpolymeren Schwierigkeiten auftreten, wenn die Fließwege der Schmelzen im Werkzeug lang sind. Dies kann dann der Fall sein, wenn aus Gründen der Verzugsfreiheit die Anschnitte so gelegt sind, daß eine Vorzugsorientierung der Glasfasern resultiert.

Im Sinne der Verbesserung der Verarbeitbarkeit von ggf. faserverstärkten oder mineralgefüllten Arylensulfidpolymeren wäre es daher von Vorteil, die Erstarrungsgeschwindigkeit der Schmelzen zu verringern. Dies kann dadurch geschehen, daß die Temperatur, bei der die Kristallisation beim Abkühlen der Schmelzen einsetzt, abgesenkt wird.

Es ist bekannt, daß die Kristallisationsgeschwindigkeit eines teilkristallinen Polymeren durch Einbau von Comonomeren verringert werden kann. Comonomer-haltige Polyphenylensulfide werden aber oft nur als Oligomere erhalten, da viele Comonomere funktionelle Gruppen tragen, die die PPS-Synthese stören können, z.B. Carbonyl-, Sulfon-, Carboxyl-, Sulfonsäure-und Ethergruppen. Solche Oligomeren können nur unzureichende mechanische Eigenschaften aufweisen.

Daher können sie gegebenenfalls zur Herstellung von Formteilen weniger geeignet sein.

Aus der DE-A- 2 903 100 ist bekannt, gegebenenfalls Nitrogruppen enthaltende Sulfonat-Salze als Flammschutzmittel für Thermoplaste, z.B. auch für PPS zu verwenden. Da es sich hier um Salze handelt, kann der Einsatz damit modifizierter Thermoplaste eingeschränkt sein, z.B. auf dem Elektrosektor, wo vor allem Isolatoreigenschaften eines Materials gefragt sind.

Es wurde nun gefunden, daß Arylensulfidpolymere nach Vermischen mit ausgewählten, hochsiedenden, aromatischen Mononitroverbindungen eine deutlich verringerte Kristallisationsgeschwindigkeit bei guter Fließfähigkeit sowie gegebenenfalls zusätzlich verbesserter Beständigkeit gegen UV-Strahlung aufweisen, ohne daß der Schmelzpunkt des Arylensulfidpolymeren nennenswert herabgesetzt wird.

Gegenstand der Erfindung sind daher leichtfließende, verzögert kristallisierende Arylensulfidpolymer-Mischungen mit gegebenenfalls zusätzlich verbesserter UV-Beständigkeit, hergestellt durch Schmelzvermischen von 75-99 Gew.-%, bevorzugt 80-98 Gew.-% und besonders bevorzugt 85-96 Gew.-% eines oder mehrerer Arylensulfidpolymerer, vorzugsweise Polyphenylensulfid, mit 1-25 Gew.-%, bevorzugt 2-20 Gew.-% und besonders bevorzugt 4-15 Gew.-% einer oder mehrerer ausgewählter hochsiedender, aromatischer Mononitroverbindungen, welche keine Sulfonsalzgruppen enthalten, einen Siedepunkt bei Normaldruck von mindestens 200°C haben und ausgewählt sind aus der Gruppe 3-Nitroacetanilid, Propionsäure-(3-nitro)anilid, Buttersäure-(3-nitro)anilid, 2-Nitrobiphenyl, 4-Nitrobiphenyl, 3-Nitro-4-chlor-acetanilid, 2-Nitroanthrachinon, 3-Nitroanthrachinon, 3-Nitrobenzoesäure, 4-Nitrobenzoesäure, 4-Nitrobenzphenolat, 4-Nitrobenzophenon, 2-Nitrodiphenylsulfon, 4-Nitrodiphenylsulfon, 3-Nitrobenzamid, 4-Nitrobenzamid, 4-Nitrobenzoesäure- butylamid, 4-Nitrobenzoesäuredodecylamid, 4-Nitrobenzoesäurestearylamid, 4-Nitrobenzoesäurebehenylamid (behenyl = C₂₂-Alkylrest), 4-Nitrobenzoesäurediphenylamid, 4- Nitrobenzoesäuremethylester, 4-Nitrobenzoesäureethylester, 4-Nitrobenzoesäuredodecylester, 4-Nitrobenzoesäure-4-nonylphenylester, 3-Nitrobenzoesäurephenylester, 3-Nitrobenzoesäurediphenylamid, und 4-Nitronaphthalin-1,8-dicarbonsäureanhydrid.

Die erfindungsgemäß einsetzbaren, aromatischen Mononitroverbindungen sind prinzipiell bekannt oder können nach prinzipiell bekannten Verfahren hergestellt werden. Sie besitzen Siedepunkte bei Normaldruck von mindestens 200°C, vorzugsweise mindestens 250°C und besonders bevorzugt mindestens 300°C.

Die Mononitroverbindungen können erfindungsgemäß einzeln oder im Gemisch eingesetzt werden.

Die Herstellung der erfindungsgemäßen Arylensulfidpolymer-Mischungen erfolgt in der Schmelze, vorzugsweise unter Anwendung von Scherkräften, gegebenenfalls unter Inertgas (z.B N₂). Alle in der Thermoplast-Verarbeitung zur Abmischung üblichen Verfahren wie z.B. Kneten, Extrudieren usw. sind zur Herstellung der erfindungsgemäßen Arylensulfidpolymeren geeignet.

Die erfindungsgemäßen Polyarylensulfid-Mischungen, vorzugsweise PPS-Mischungen, können auch übliche Füllstoffe wie z.B. Glasfasern, Quarzmehl, Glimmer, Talk, Metalloxide, Pigmente, Kohlefasern, Ruß usw. enthalten, weiterhin auch kautschukartige Legierungspartner zur Erhöhung der Schlagzähigkeit.

Sie können, gegebenenfalls nach Zusatz üblicher Hilfsmittel wie z.B. Entformungsmittel, Stabilisatoren, Antioxidantien usw. auf übliche Weise zu geformten Körpern wie Halbzeugen, Fasern, Folien, Spritzgußartikeln usw. verarbeitet werden.

Die modifizierten Arylensulfidpolymer-Mischungen zeichnen sich durch niedrige Schmelzviskosität und eine verringerte Kristallisationsgeschwindigkeit bei praktisch unveränderter Schmelztemperatur des Polymeren aus Sie können gegebenenfalls den weiteren überraschenden Vorteil einer verbesserten Beständigkeit gegen UV-Strahlung aufweisen. Eine Methode zur Bestimmung des Ausmaßes der Bindungsbrücke durch UV-Bestrahlung ist die Messung der Radikalkonzentration unter Bestrahlulng, z.B. durch ESR-Spektroskopie.

Die erfindungsgemäßen Polyarylensulfid-Mischungen, vorzugsweise PPS-Mischungen, können für die für PPS bekannten Verwendungen eingesetzt werden, z.B. zur Herstellung von Fasern, Monofilen, Filamenten, flächigen Geweben, Folien und Formkörpern.

Die Schmelzviskositätsmessungen wurden mit einem Contravis RM 300 Platte-Kegel-Viskosimeter, die DSC-Messungen mit einem Perkin-Elmer DSC-System 7 Gerät durchgeführt.

Als Maß für die Kristallisationsgeschwindigkeit wurde das Maximum der Kristallisations-Exothermen beim Abkühlen aus der Schmelze (dynamische Kristallisation) gewählt.

### Beispiele

### Beispiel 1

In einem Rundkolben wurden 50 g PPS-Granulat mit einer Schmelzviskosität von 25 Pas bei 320°C und einem Schergefälle von 100 s⁻¹ unter N₂ mit 5,5 g 3-Nitrobenzamid vermengt, auf 320°C erhitzt und unter Rühren homogenisiert. Insgesamt wurde nach dem Aufschmelzen des Polymeren 30 min lang gerührt.

Anschließend wurden die Heizbäder weggenommen, die Mischungen auf Raumtemperatur abgekühlt und die Proben gehäckselt.

Die Ergebnisse der DSC-Untersuchung sowie der Schmelzviskositätsbestimmung sind in der Tabelle angegeben.

### Beispiel 2

In der in Beispiel 1 angegebenen Weise wurde ein modifiziertes Polyparaphenylensulfid aus einer Mischung von PPS mit einer Schmelzviskosität von 25 Pas bei 320°C und einem Schergefälle von 100 s⁻¹ und 3-Nitroacetanilid, die 10 Gew.-% der Nitroverbindung enthielt, hergestellt. Die Ergebnisse der DSC-Untersuchung sowie der Schmelzviskositätsbestimmung sind in der Tabelle angegeben.

### Beispiel 3

In der in Beispiel 1 angegebenen Weise wurde ein modifiiertes Polyparaphenylensulfid aus einer Mischung von PPS mit einer Schmelzviskosität von 38 Pas bei 320°C und einem Schergefälle von 100 s⁻¹ und 4-Nitrobenzoesäurestearylamid (10 Gew-%) hergestellt. Die Ergebnisse der DSC-Untersuchung sind in der Tabelle angegeben.

### Vergleichsbeispiel 1

In der in Beispiel 1 angegebenen Weise wurde das reine PPS-Granulat, welches in den Beispielen 1 und 2 eingesetzt worden war, aufgeschmolzen, 30 min lang gerührt und anschließend, nach Entfernen des Heizbads, das Polymere auf Raumtemperatur abgekühlt und gehäckselt.

Die Ergebnisse der DSC-Untersuchung sowie der Schmelzviskositätsbestimmung sind in der Tabelle angegeben.

### Vergleichsbeispiel 2

In der in Beispiel 1 angegebenen Weise wurde das in Beispiel 3 benutzte PPS-Granulat aufgeschmolzen, 30 min lang gerührt und anschließend, nach Entfernen des Heizbads, das Polymere auf Raumtemperatur abgekühlt und gehäckselt. Die Ergebnisse der DSC-Untersuchung sind in der Tabelle aufgeführt.

In der folgenden Tabelle bedeuten Ts den Schmelzpunkt des PPS und Tk das Maximum der Kristallisationstemperatur beim Abkühlen. Beide wurden mit einer Aufheiz- bzw. Abkühlgeschwindigkeit von 20 K min⁻¹ bestimmt.

SV bedeutet die Schmelzviskosität der Mischung bei einer Temperatur von 320°C und einem Schergefälle von 100 s⁻¹.

**Tabelle**

| Beispiel | Ts (°C) | Tk (°C) | SV (Pa s) |
|---|---|---|---|
| 1 | 276,8 | 199,9 | 23 |
| 2 | 276,7 | 197,1 | 25 |
| 3 | a) | 221,8 | a) |
| Vergleich 1 | 281,5 | 239,0 | 25 |
| Vergleich 2 | a) | 233,2 | a) |
| a) = nicht bestimmt | | | |

### Beispiel 4

Man stellt einen Schmelzkörper aus Poly-p-phenylensulfid mit einer Schmelzviskosität von 44 Pa.s (306°C, 1000 s⁻¹) und 5 Gew.- % (bezogen auf die Mischung) 4-Nitronaphthalin- 1,8-dicarbonsäureanhydrid her. 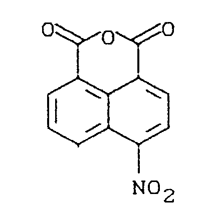
(4-Nitronaphthalin-1,8-dicarbonsäureanhydrid)
Man schabt mit einem Korundschaber PPS-Flocken von diesem Schmelzkörper ab und füllt sie in ein ESR-Röhrchen (Durchmesser 3 mm). Nach einer Wartezeit von einigen Tagen bestrahlt man unter Luft bei -110°C mit einer 500-W-Hg-Lampe, deren kurzwelliger Anteil ((305nm) herausgefiltert wurde. Die niedrige Temperatur verhindert die Weiterreaktion der durch die Bestrahlung erzeugten Radikale.

Die Differenz der in 60 Minuten minus der in 30 Minuten gebildeten Radikale wird als Maß für die Radikalbildungsgeschwindigkeit gewählt, Differenz: 30 (Relativzahlen). Die Messung erfolgt z.B. durch ESR-Spektroskopie.

### Vergleichsbeispiel 3

In derselben Weise wird die Radikalbildungsgeschwindigkeit eines PPS-Schmelzkörpers bestimmt. Differenz: ca. 180 (Relativzahlen).

### Beispiel 5

In derselben Weise wird die Radikalbildungsgeschwindigkeit mit 5 Gew.-% (bezogen auf Mischung) 4-Nitrobenzoesäurestearylamid- 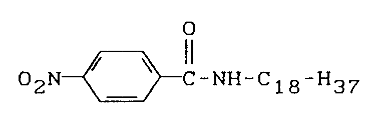
modifiziertem PPS bestimmt.
Differenz: ca. 100 (Relativzahlen).

## Patentansprüche

1. Leichtfließende, verzögert kristallisierende Arylensulfidpolymer-Mischungen mit gegebenenfalls zusätzlich verbesserter Beständigkeit gegen UV-Strahlung, hergestellt durch Schmelzvermischen von 75-99 Gew.-%, eines oder mehrerer Arylensulfidpolymerer, mit 1-25 Gew.-%, einer oder mehrerer ausgewählter hochsiedender, aromatischer Mononitroverbindungen, welche keine Sulfonsalzgruppen enthalten, einen Siedepunkt bei Normaldruck von mindestens 200°C haben und ausgewählt sind aus der Gruppe 3-Nitroacetanilid, Propionsäure-(3-nitro)anilid, Buttersäure-(3-nitro)anilid, 2-Nitrobiphenyl, 4-Nitrobiphenyl, 3-Nitro-4-chlor-acetanilid, 2-Nitroanthrachinon, 3-Nitroanthrachinon, 3-Nitrobenzoesäure, 4-Nitrobenzoesäure, 4-Nitrobenzphenolat, 4-Nitrobenzophenon, 2-Nitrodiphenylsulfon, 4-Nitrodiphenylsulfon, 3-Nitrobenzamid, 4-Nitrobenzamid, 4-Nitrobenzoesäure- butylamid, 4-Nitrobenzoesäuredodecylamid, 4-Nitrobenzoesäurestearylamid, 4-Nitrobenzoesäurebehenylamid (behenyl = C₂₂-Alkylrest), 4-Nitrobenzoesäurediphenylamid, 4-Nitrobenzoesäuremethylester, 4-Nitrobenzoesäureethylester, 4-Nitrobenzoesäuredodecylester, 4-Nitrobenzoesäure-4-nonylphenylester, 3-Nitrobenzoesäurephenylester, 3-Nitrobenzoesäurediphenylamid, und 4-Nitronaphthalin-1,8-dicarbonsäureanhydrid.

2. Arylensulfidpolymer-Mischungen nach Anspruch 1, dadurch gekennzeichnet, daß das Arylensulfidpolymer Polyparaphenylensulfid ist.

3. Arylensulfidpolymer-Mischungen nach Anspruch 1, dadurch gekennzeichnet, daß Gemische von Mononitroverbindungen eingesetzt werden.

4. Verwendung der Arylensulfidpolymer-Mischungen nach Anspruch 1 zur Herstellung von Folien und Formkörpern.

5. Verwendung der Arylensulfidpolymer-Mischungen nach Anspruch 1 zur Hestellung von Fasern, Monofilen, Filamenten und flächigen Geweben.

## Claims

1. Free-flowing arylene sulfide polymer mixtures crystallizing with delay and having optionally additionally improved UV stability prepared by mixing 75 to 99% by weight of one or more arylene sulfide polymers in the melt with 1 to 25% by weight of one or more selected high-boiling, aromatic mononitro compounds which do not contain any sulfonate salt groups, have a boiling point under normal pressure of at least 200°C and are selected from the group consisting of 3-nitroacetanilide, propionic acid (3-nitro)-anilide, butyric acid (3-nitro)-anilide, 2-nitrobiphenyl, 4-nitrobiphenyl, 3-nitro-4-chloroacetanilide, 2-nitroanthraquinone, 3-nitroanthraquinone, 3-nitrobenzoic acid, 4-nitrobenzoic acid, 4-nitrobenzphenolate, 4-nitrobenzophenone, 2-nitrodiphenyl sulfone, 4-nitrodiphenyl sulfone, 3-nitrobenzamide, 4-nitrobenzamide, 4-nitrobenzoic acid butyl amide, 4-nitrobenzoic acid dodecyl amide, 4-nitrobenzoic acid stearyl amide, 4-nitrobenzoic acid behenyl amide (behenyl = C₂₂ alkyl radical), 4-nitrobenzoic acid diphenyl amide, 4-nitrobenzoic acid methyl ester, 4-nitrobenzoic acid ethyl ester, 4-nitrobenzoic acid dodecyl ester, 4-nitrobenzoic acid 4-nonyl phenyl ester, 3-nitrobenzoic acid phenyl ester, 3-nitrobenzoic acid diphenyl amide and 4-nitronaphthalene-1,8-dicarboxylic anhydride.

2. Arylene sulfide polymer mixtures as claimed in claim 1, characterized in that the arylene sulfide polymer is polyparaphenylene sulfide.

3. Arylene sulfide polymer mixtures as claimed in claim 1, characterized in that mixtures of mononitro compounds are used.

4. The use of the arylene sulfide polymer mixtures claimed in claim 1 for the production of films and moulded articles.

5. The use of the arylene sulfide polymer mixtures claimed in claim 1 for the production of fibres, monofils, filaments and sheet-form woven fabrics.

## Revendications

1. Mélanges fluides de polymères de sulfures d'arylène à cristallisation retardée, doués en outre le cas échéant d'une très bonne stabilité aux rayons ultraviolets, préparés par mélange à l'état fondu de 75 à 99 % en poids d'un ou plusieurs polymères de sulfures d'arylène, avec 1 à 25 % en poids d'un ou plusieurs composes aromatiques mononitrés choisis, de haut point d'ébullition, qui ne contiennent pas de groupes sel sulfonique, qui ont un point d'ébullition à la pression normale d'au moins 200°C et qui sont choisis dans le groupe comprenant le 3-nitro-acétanilide, le (3-nitro)anilide d'acide propionique, le (3-nitro)anilide d'acide butyrique, le 2-nitrobiphényle, le 4-nitrobiphényle, le 3-nitro-4-chloracétanilide, la 2-nitroanthraquinone, la 3-nitroanthraquinone, l'acide 3-nitrobenzoïque, l'acide 4-nitrobenzoïque, le 4-nitrobenzophénolate, la 4-nitrobenzophénone, la 2-nitrodiphénylsulfone, la 4-nitrodiphénylsulfone, le 3-nitrobenzamide, le 4-nitrobenzamide, le butylamide d'acide 4-nitrobenzoïque, le dodécylamide d'acide 4-nitrobenzoïque, un arylamide d'ester d'acide 4-nitrobenzoïque, le béhénylamide d'acide 4-nitrobenzoïque (béhényle = reste alkyle en C₂₂), le diphénylamide d'acide 4-nitrobenzoïque, l'ester méthylique d'acide 4-nitrobenzoïque, l'ester éthylique d'acide 4-nitrobenzoïque, l'ester dodécylique d'acide 4-nitrobenzoïque, l'ester 4-nonylphénylique d'acide 4-nitrobenzoïque, l'ester phénylique d'acide 3-nitrobenzoïque, le diphénylamide d'acide 3-nitrobenzoïque et l'anhydride d'acide 4-nitronaphtalène-1,8-dicarboxylique.

2. Mélanges de polymères de sulfures d'arylène suivant la revendication 1, caractérisés en ce que le polymère de sulfure d'arylène est un polysulfure de paraphénylène.

3. Mélanges de polymères de sulfures d'arylène suivant la revendication 1, caractérisés en ce qu'on utilise des mélanges de composés mononitrés.

4. Utilisation des mélanges de polymères de sulfures d'arylène suivant la revendication 1 pour la production de feuilles et de corps façonnés.

5. Utilisation des mélanges de polymères de sulfures d'arylène suivant la revendication 1 pour la production de fibres, de mono-fils, de filaments et de corps plans textiles.
